# EUROPÄISCHE PATENTSCHRIFT

(11) **EP 2 407 675 B1**
(45) Veröffentlichungstag und Bekanntmachung des Hinweises auf die Patenterteilung: **26.03.2014**
(21) Anmeldenummer: 11172156.9
(22) Anmeldetag: 30.06.2011
(51) Int. Cl.: F16B 12/34, F24C 15/10

(54) **Hausgerät mit einer Deckplatte und einem unter der Deckplatte angeordneten Gehäuse sowie Verfahren zur Positionierung eines Sicherungswinkels an einem unter einer Deckplatte angeordneten Gehäuses eines Hausgeräts**
Domestic appliance with a covering board and a housing under the covering board and method for positioning a securing bracket on a housing of a domestic appliance under a covering board
Appareil ménager doté d'une plaque de recouvrement et d'un boîtier placé sous la plaque de recouvrement ainsi que procédé de positionnement d'une équerre de fixation sur un boîtier placé sous la plaque de recouvrement d'un appareil ménager

(30) Priorität: 14.07.2010 ES 201031074
(43) Veröffentlichungstag der Anmeldung: 18.01.2012
(73) Patentinhaber: BSH Bosch und Siemens Hausgeräte GmbH, 81739 München (DE)
(72) Erfinder: Aranda Vazquez, Sandra, 50015 Zaragoza (ES); Arnal Valero, Adolfo, 50009 Zaragoza (ES); Dionisio Micolau, Diego, 50013 Zaragoza (ES); Ferrer Salillas, Alejandro Jesus, 50010 Zaragoza (ES); Garcia Herrer, Antonio José, 50015 Zaragoza (ES); Martin Gomez, Damaso, 20012 Zaragoza (ES); Moya Albertin, Maria Elena, 50002 Zaragoza (ES); Ortiz Sainz, David, 50298 Pinseque (Zaragoza) (ES); Perez Cabeza, Pilar, 50008 Zaragoza (ES); Pina Gadea, Carmelo, 50008 Zaragoza (ES); Torrubia Marco, Demetrio, 50003 Zaragoza (ES); Valencia Betran, María, 50010 Zaragoza (ES)

(56) Entgegenhaltungen:
- DE-A1- 19 912 452

## Beschreibung

Die Erfindung betrifft ein Hausgerät mit einer Deckplatte und einem unter der Deckplatte angeordneten Gehäuse, an dessen Seitenwand ein Sicherungswinkel mit einer Schraube befestigbar ist. Des Weiteren betrifft die Erfindung ein Verfahren zur Positionierung eines Sicherungswinkels an einem unter einer Deckplatte angeordneten Gehäuse eines Hausgeräts relativ zur Deckplatte, bei welchem der Sicherungswinkel durch eine Schraube an dem Gehäuse befestigt wird.

Aus der DE 199 12 452 A1 ist eine Einbauleiste für ein Kochfeld bekannt. Eine Kochfeldplatte wird an einem Blechwinkel montiert, wobei dazu zwischen dem Blechwinkel und der Kochfeldplatte eine Gummidichtung angebracht wird. Der Blechwinkel ist andererseits an einer Arbeitsplatte montiert und weist einen Montageschenkel und einen dazu gewinkelt angeordneten Ablageschenkel auf.

Bei Kochfeldern, die in einer Aussparung einer Arbeitsplatte angebracht werden, sitzt eine Kochfeldplatte, welche insbesondere aus Glaskeramik ausgebildet ist, auf der Oberseite der Arbeitsplatte auf. Dies bedeutet, dass die Aussparung in der Arbeitsplatte kleiner bemessen ist als die Ausmaße der Kochfeldplatte. Unter der Kochfeldplatte ist ein Gehäuse angeordnet bzw. montiert, das in seinen Ausmaßen kleiner als die Kochfeldplatte und darüber hinaus auch kleiner als die Aussparung in der Arbeitsplatte ist. Das Gehäuse ist somit quasi in die Aussparung versenkt. Um ein ungeordnetes Lösen des Gehäuses von der Kochfeldplatte und ein Herunterfallen des Gehäuses durch die Aussparung verhindern zu können, werden Sicherungswinkel verwendet, die an dem Gehäuse angeschraubt sind. Diese Sicherungswinkel erstrecken sich auch über die Aussparung hinaus und liegen somit auch zumindest bereichsweise auf der Oberseite der Arbeitsplatte auf.

Selbst bei einem ungewollten Lösen der Verbindung zwischen der Kochfeldplatte und dem Gehäuse kann somit ein nach unten Fallen des Gehäuses durch die Aussparung verhindert werden.

Bei den bekannten Ausgestaltungen tritt jedoch das Problem auf, dass durch die herkömmliche Montagevorgehensweise und die Ausgestaltung des Sicherungswinkels im festmontierten Zustand dieser gekippt ist und somit ein ungewolltes Positionieren das Ergebnis ist. Insbesondere durch diese nahezu unvermeidbare Verkippung des Sicherungswinkels im montierten Endzustand werden somit auch ungewollte Kontaktierungen und auch unerwünschte Krafteinwirkungen an spezifischen Stellen auf die Kochfeldplatte ausgeübt.

Es ist Aufgabe der vorliegenden Erfindung, ein Hausgerät sowie ein Verfahren zu schaffen, bei welchem bzw. mit welchem die Positionierung eines derartigen Sicherungswinkels im Hinblick auf seine Orientierung insbesondere auch zur Deckplatte exakter erfolgt, ohne dass unerwünschte Stellungen und Krafteinwirkungen auf der Deckplatte auftreten.

Diese Aufgabe wird durch ein Hausgerät, welches die Merkmale nach Anspruch 1 aufweist, und ein Verfahren welches die Merkmale nach Anspruch 6 aufweist, gelöst.

Ein erfindungsgemäßes Hausgerät umfasst eine Deckplatte und ein unter der Deckplatte angeordnetes Gehäuse. An den Seitenwänden des Gehäuses ist zumindest ein Sicherungswinkel mit einer Schraube befestigbar bzw. ist dort befestigt. Eine Form eines zum Durchführen der Schraube ausgebildeten Durchführlochs des Sicherungswinkels ist an einen Schraubenstift in einem Gewinde so angepasst ausgebildet, dass beim Anschrauben des Sicherungswinkels an das Gehäuse sich ein Auflageteil des Sicherungswinkels sich selbst positionierend an eine Unterseite der Deckplatte anlegt und im montierten Zustand parallel zur Deckplatte ausgerichtet ist. Es wird also in spezifischer Ausgestaltung das Durchführloch im Sicherungswinkel und der Schraubenstift der Schraube so zueinander kompatibel gestaltet, dass beim Montieren an sich eine Endlage des Sicherungswinkels automatisch erreicht wird, welche eine gewünschte Orientierung zur Deckplatte gewährleistet und darüber hinaus keine sonstigen unerwünschten Effekte, insbesondere unerwünschte Krafteinwirkungen, auf die Deckplatte durch den Sicherungswinkel ausgeübt werden und Schrägstellungen des Sicherungswinkels verhindert werden. Dadurch kann zum einen unerwünschter Verschleiß oder Beschädigung an den Komponenten vermieden werden und darüber hinaus auch ein völlig ebenes Aufliegen der Deckplatte erreicht werden.

Das Durchführloch ist ein Langloch, welches über seine Länge betrachtet einen oberen schmalen Bereich und einen unteren dicken Bereich aufweist. Das Langloch ist somit über seine Länge betrachtet nicht mit gleichmäßiger Breite ausgebildet. Dies ist besonders vorteilhaft im Hinblick einerseits auf das Einführen der Schraube zum anderen im Montageprozess dahingehend vorteilhaft, dass diese Selbstpositionierung entsprechend unterstützt wird.

Der obere Bereich des Durchführlochs weist eine Breite auf, die maximal einen Wert kleiner einer Höhe eines Gewindestegs größer ist, als der Außendurchmesser eines Schafts des Schraubenstifts. Durch diese Dimensionierungen wird beim Einschrauben der Schraube in die Seitenwand die Selbstpositionierung besonders begünstigt und präzisiert.

Vorzugsweise ist das Durchführloch birnenförmig ausgebildet. Dies gewährleistet die oben genannten Vorteile in besonderer Weise.

Vorzugsweise ist der Sicherungswinkel im Bereich des Durchführlochs mit einer Dicke ausgebildet, die kleiner als ein Abstand zwischen zwei benachbarten Gewindestegen ist. Dadurch kann zum einen der Sicherungswinkel quasi auf die Schraube aufgefädelt werden und bleibt in der gewünschten geneigten Position, so dass beim Anschrauben die Selbstpositionierung im Hinblick beim Abstützen an der Schraube, an der Deckplatte und der Seitenwand automatisch erzeugt wird.

Vorzugsweise ist das Hausgerät ein Kochfeld und die Deckplatte eine Kochfeldplatte, welche beispielsweise aus Glaskeramik ausgebildet ist.

Gerade dann, wenn dieses Kochfeld in einer Aussparung in einer Arbeitsplatte montiert ist, wie dies eingangs zum Stand der Technik erläutert wurde, kann somit einerseits das Herunterfallen des Gehäuses bei einem Lösen von der Kochfeldplatte verhindert werden und darüber hinaus die grundsätzliche Anordnung der genannten Komponenten zueinander äußerst exakt und ohne unerwünschte Krafteinflüsse auf beispielsweise die Deckplatte erreicht werden.

Insbesondere ist somit der Sicherungswinkel auch als Herunterfallschutz für das Gehäuse im eingebauten Zustand des Kochfelds in eine Aussparung in einer Arbeitsplatte ausgebildet.

Des Weiteren betrifft die Erfindung ein Verfahren zur Positionierung eines Sicherungswinkels an einem unter einer Deckplatte angeordneten Gehäuses eines Hausgeräts relativ zur Deckplatte, bei welchem der Sicherungswinkel durch eine Schraube am Gehäuse befestigt wird. Eine Form eines zum Durchführen der Schraube ausgebildeten Durchführlochs des Sicherungswinkels wird an einen Schraubenstift mit einem Gewinde angepasst ausgebildet, und beim Anschrauben des Sicherungswinkels an das Gehäuse wird aufgrund der angepassten Form des Durchführlochs ein Auflageteil des Sicherungswinkels sich selbst positionierend an die Unterseite angelegt und beim Anschrauben selbstständig parallel zur Deckplatte ausgerichtet. Der Montagevorgang erfolgt aufgrund der Ausgestaltung des Sicherungswinkels mit dem Durchführloch und der Schraube somit in automatischer Weise beim Anziehen der Schraube dahingehend, dass sich der Sicherungswinkel in die gewünschte Position selbst ausrichtet und dort auch verbleibt. Durch den Anschraubvorgang und das Drehen der Schraube wird durch die Formgestaltung des Durchführlochs und des Schraubenstifts der Sicherungswinkel automatisch in eine an der Unterseite der Deckplatte anliegende und dazu parallel orientierte Lage gebracht.

Das Durchführloch wird als ein Langloch mit einem über seine Länge betrachtet oberen schmalen Bereich und einem unteren dicken Bereich ausgebildet, insbesondere wird das Durchführloch birnenförmig ausgebildet.

Es wird der obere Bereich des Durchführlochs mit einer Breite ausgebildet, die maximal einen Wert kleiner einer Höhe eines Gewindestegs größer ist, als der Außendurchmesser eines Schafts des Schraubenstifts.

Der Schraubenstift wird durch das Durchführloch geführt und ein Basisbereich des Sicherungswinkels wird zwischen zwei Gewindestegen in einem Winkel im Wesentlichen entsprechend der Gewindestegneigung positioniert. Dies erfolgt in einem ersten Schritt vor dem tatsächlichen Anschrauben.

Vorzugsweise ist der Sicherungswinkel im Bereich des Durchführlochs mit einer Dicke ausgebildet, die kleiner als ein Abstand zwischen zwei benachbarte Gewindestegen ist.

Ein derartiges Auffädeln des Sicherungswinkels auf die Schraube erfolgt somit vor dem eigentlichen Anschraubprozess. Der so gebildete Zwischenzustand wird dann vorzugsweise dahingehend fortgeführt, indem die Schraube in das Befestigungsloch in der Seitenwand des Gehäuses angesetzt und eingeschraubt wird. Durch die Neigung des Sicherungswinkels wird der Auflageteil des Sicherungswinkels mit einer Endseite an der Unterseite der Deckplatte abstützend angelegt.

Insbesondere wird dann bei weiterem Eindrehen der Schraube in das Befestigungsloch aufgrund der geneigten Lage des Basisteils des Sicherungswinkels eine Unterseite des Basisteils mit einer Unterseite eines Schraubenkopfs der Schraube kontaktiert und eine Rückseite des Basisteils wird mit der Seitenwand des Gehäuses kontaktiert. Es wird also während des Eindrehvorgangs der Schraube ein Zwischenklemmzustand des Sicherungswinkels in seiner geneigten Position zwischen dem Schraubenkopf, der Unterseite der Deckplatte und der Seitenwand erzeugt.

Aufgrund dieser erreichten Zwischenklemmposition während des Eindrehens der Schraube und vor dem Erreichen des tatsächlich vollständig eingeschraubten Zustands kann im Weiteren Eindrehprozess der Schraube die Selbstpositionierung präzise und zuverlässig in die gewünschte Lage erfolgen.

Insbesondere greifen somit beim weiteren Eindrehen der Schraube in das Befestigungsloch aufgrund des erläuterten geklemmten Zustands des Sicherungswinkels die Gewindestege aufgrund der Gewindegeometrie und der Form des Durchführlochs an das Basisteil im Bereich des oberen Bereichs des Durchführlochs an. Der Sicherungswinkel wird automatisch von der geneigten Lage in die sich selbst positionierende Endlage mit einem Anlegen der Rückseite des Basisteils an der Seitenwand und einem Anlegen des Auflageteils an der Unterseite der Deckplatte mit paralleler Orientierung des Auflageteils zur Deckplatte gebracht.

Die Positionierung des Befestigungslochs im Hinblick auf den Abstand zur Deckplatte wird im Hinblick auf die Ausgestaltung und die Größe des Sicherungswinkels entsprechend zur Durchführung der oben genannten Verfahrensschritte festgelegt. Im Hinblick auf die geneigte Lage ist diesbezüglich anzumerken, dass der Sicherungswinkel in zwei Raumrichtungen eine geneigte Lage aufweist. Zum einen ist dabei beim Ansetzen der Schraube zum Eindrehen in das Befestigungsloch eine erste Neigung des Sicherungswinkels nach unten gegenüber der Horizontalen und somit gegenüber der Unterseite der Deckplatte vorliegend. Darüber hinaus ist eine weitere Neigung dahingehend vorliegend, dass der Sicherungswinkel gegenüber der Ebene der Seitenwand des Gehäuses nach vorne geneigt positioniert ist. Dies ergibt sich dadurch, dass aufgrund der Neigung der Gewindestege und dem darin Einfädeln des Sicherungswinkels auch diesbezüglich eine entsprechende Neigungsposition gegeben ist.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ein Ausführungsbeispiel der Erfindung wird nachfolgend anhand schematischer Zeichnungen näher erläutert. Es zeigen:
- Fig. 1: eine schematische Schnittdarstellung für ein Ausführungsbeispiel eines erfindungsgemäßen Hausgeräts in Form eines Kochfelds, welches in einer Arbeitsplatte angeordnet ist;
- Fig. 2: eine perspektivische Darstellung eines Ausführungsbeispiels eines Sicherungswinkels des Kochfelds gemäß Fig. 1;
- Fig. 3: eine schematische Schnittdarstellung einer Schraube, die durch ein Durchführloch des Sicherungswinkels gemäß Fig. 2 geführt ist;
- Fig.4: eine Seitenansicht eines auf die Schraube aufgefädelten Sicherungswinkels vor dem Ansetzen beim Eindrehen in das Gehäuse;
- Fig. 5a und 5b: eine Seitenansicht und Draufsicht auf das Kochfeld gemäß Fig. 1 in einem ersten Montagezustand;
- Fig. 6a und 6b: Seitenansicht und Draufsicht auf das Kochfeld gemäß einem zweiten Montagezustand;
- Fig. 7a und 7b: Seitenansicht und Draufsicht auf das Kochfeld gemäß einem nachfolgenden dritten Montagezustand; und
- Fig. 8a und 8b: Seitenansicht und Draufsicht auf das Kochfeld im montierten Endzustand des Sicherungswinkels.

In den Figuren werden gleiche oder funktionsgleiche Elemente mit den gleichen Bezugszeichen versehen.

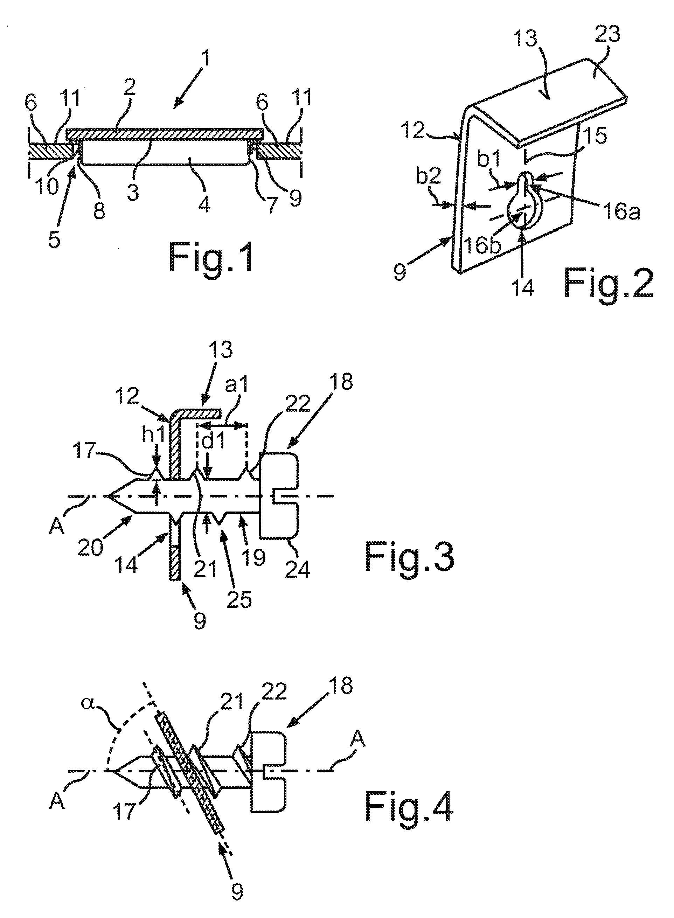

In Fig. 1 ist in einer schematischen Schnittdarstellung ein Hausgerät zur Zubereitung von Lebensmitteln gezeigt, welches als Kochfeld 1 ausgebildet ist. Das Kochfeld 1 umfasst eine Kochfeldplatte 2, welche aus Glaskeramik ausgebildet sein kann. An einer Unterseite 3 ist unterhalb der Kochfeldplatte 2 ein Gehäuse 4 angeordnet, welches zur Aufnahme von Elektronikkomponenten und Heizkörpern zum Heizen der auf der Kochfeldplatte 2 ausgebildeten Kochzonen ausgebildet ist. Das Gehäuse 4 ist mit der Kochfeldplatte 2 verbunden. Das Kochfeld 1 ist in einer Aussparung 5 in einer Arbeitsplatte 6 angeordnet. Die Ausmaße der Kochfeldplatte 2 sind dabei größer als die Ausmaße der Aussparung 5. Die Ausmaße des Gehäuses 4 sind demgegenüber kleiner als die Ausmaße der Aussparung 5. Um bei einem ungewollten Lösen des Gehäuses 4 von der Kochfeldplatte 2 ein Herunterfallen des Gehäuses 4 zu vermeiden, sind an Seitenwänden 7 und 8 des Gehäuses 4 Sicherungswinkel 9 und 10 ausgebildet. Diese sind so angeordnet, dass sie sich über die Aussparung 5 hinwegerstrecken und auf einer Oberseite 11 der Arbeitsplatte 6 aufliegen. Die Sicherungswinkel 9 und 10 sind an die Seitenwände 7 und 8 angeschraubt. Anzahl und Ort der Sicherungswinkel 9 und 10 sind beispielhaft.

In Fig. 2 ist in perspektivischer Darstellung beispielhaft der Sicherungswinkel 9 näher dargestellt. Er weist ein Basisteil 12 auf, an den ein im 90° dazu angeordnetes Auflageteil 13 anschließt. In dem Basisteil 12 ist ein Durchführloch 14 zum Durchführen einer Schraube ausgebildet. Das Durchführloch 14 ist entlang einer Länge 15 mit variierender Breite ausgebildet. In einem oberen Bereich 16a ist diese Breite kleiner als in einem unteren Bereich 16b. Im Ausführungsbeispiel ist das Durchführloch 14 birnenförmig gestaltet.

Der obere Bereich 16a weist eine Breite b1 auf, die maximal einen Wert kleiner einer Höhe h1 (Fig. 3) eines Gewindestegs 17 einer Schraube 18 größer ist als ein Außendurchmesser d1 eines Schafts 19 eines Schraubenstifts 20 der Schraube 18.

Der Sicherungswinkel 9 weist darüber hinaus im Bereich des Durchführlochs 14 ein Dicke b2 auf, die kleiner ist als ein Abstand a1 zwischen zwei benachbarten Gewindestegen 21 und 22.

Die als Deckplatte ausgebildete Kochfeldplatte 2 ist darüber hinaus so angeordnet, dass die Sicherungswinkel 9 und 10 sich darunter erstrecken und mit einer Oberseite 23 an der Unterseite 3 nahezu vollflächig anliegen.

In Fig. 3 ist in einer schematischen Schnittdarstellung die Schraube 18 mit beispielhaft dazu positionierten Sicherungswinkel 9 gezeigt, wobei der Schraubenstift 20 durch das Durchführloch 14 teilweise durchgeführt ist. Die Schraube umfasst darüber hinaus auch noch einen Schraubenkopf 24 und weist eine Längsachse A auf.

Im Hinblick auf die Montage des Sicherungswinkels 9 an der Seitenwand 7 des Gehäuses 4 unterhalb der Kochfeldplatte 2 ist zunächst vorgesehen, dass die Form des zum Durchführen der Schraube 18 ausgebildeten Durchführlochs 14 des Sicherungswinkels 9 an den Schraubenstift 20 mit seinem Gewinde 25 so angepasst ausgebildet ist, dass beim Anschrauben des Sicherungswinkels 9 an das Gehäuse 4 das Auflageteil 13 des Sicherungswinkels 9 sich selbstpositionierend an die Unterseite 3 der Kochfeldplatte 2 anlegt und darüber hinaus auch automatisch parallel zu dieser Unterseite 3 ausgerichtet ist.

Dazu wird nachfolgend das Montageverfahren zum Positionieren des Sicherungswinkels 9 näher erläutert. Im übrigen gilt dies auch für die Ausgestaltung und Vorgehensweise bei der Montage des Sicherungswinkels 10.

Aufgrund der Ausgestaltung des Durchführlochs 14 und der Dicke d2 des Sicherungswinkels 9 sowie des Abstands a1 von benachbarten Gewindestegen der Schraube 18 wird zunächst in einem ersten Schritt gemäß der Darstellung in Fig. 4 der Sicherungswinkel 9 auf die Schraube 18 aufgefädelt. Aufgrund der oben genanten geometrischen Ausgestaltung und Ausmaßdimensionierungen ist der Sicherungswinkel 9 in einem Winkel α zur Achse A der Schraube 18 geneigt angeordnet. Dieser Winkel α entspricht in etwa dem Winkel, den die Neigung eines Gewindestegs 17 bzw. 21 bzw. 22 gegenüber dieser Achse A aufweist. Das heißt, in diesem aufgefädelten Zustand ist der Sicherungswinkel 9 mit seinem Basisteil 12 in etwa gleich geneigt wie ein Gewindesteg 17 bzw. 21 bzw. 22.

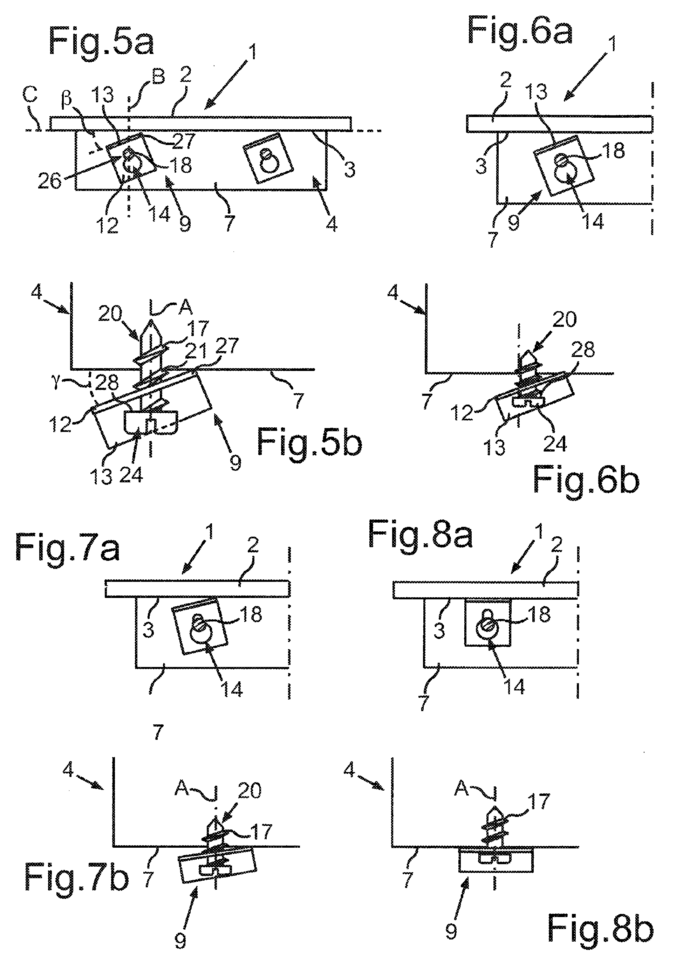

Anhand der weiteren Figuren wird nun der Montagevorgang näher erläutert. In Fig. 5a ist dazu eine Seitenansicht des Kochfelds 1 gezeigt, bei dem die Zwischenausgestaltung gemäß Fig. 4 genommen wird und die Schraube 18 in ein Befestigungsloch 26 in der Seitenwand 7 teilweise eingedreht ist. In Fig. 5b ist dazu die Draufsicht gezeigt, wobei zur besseren Erkennung des Sicherungswinkels 9 unterhalb der Kochfeldplatte 2 diese Kochfeldplatte 2 in Fig. 5b abgenommen ist.

Wie in der Darstellung gemäß Fig. 5a zu erkennen ist, ist aufgrund der geometrischen Verhältnisse des Durchführlochs 14 und der Schraube 18 insbesondere des Schraubenstifts 20 diese Neigung gegeben. In diesem Zusammenhang ist eine Neigung des Sicherungswinkels 9 gegenüber einer vertikalen Achse B um einen entsprechenden Winkel gegeben, bzw. analog dazu eine Neigung gegenüber einer horizontalen Achse C, die die Unterseite 3 der Kochfeldplatte 2 umfasst, gegeben, wobei dazu der Winkel β gezeigt ist.

Dies ergibt sich dadurch, dass eine erste seitliche Ecke 27 des Auflageteils 13 an der Unterseite 3 anliegt.

Gemäß der Darstellung in Fig. 5b ist darüber hinaus zu erkennen, dass eine weitere geneigte Position des Sicherungswinkels 9 ausgebildet ist und zwar in einer anderen und senkrecht zur Achse C verlaufenden Raumrichtung. Diese weitere Raumrichtung ist durch die Achse A der Schraube 18 gegeben. Der Sicherungswinkel 9 ist somit gegenüber der Seitenwand 7 um einen Winkel γ nach vorne geneigt angeordnet. Der Schraubenkopf 24 ist, wie in Fig. 5b zu erkennen ist, mit seiner Innenseite 28 noch beabstandet zum Basisteil 12 angeordnet.

Ausgehend von der Darstellung in Fig. 5a und 5b wird im weiteren Montageverfahren gemäß den Darstellungen in Fig. 6a und 6b die Schraube 18 weiter in das Befestigungsloch 26 eingedreht. Dabei tritt dann ein Zustand auf, wie er in Fig. 6b gezeigt ist. Die Innenseite 28 kontaktiert mit der Vorderseite des Basisteils 12. Dadurch wird ein Zwischenklemmzustand erreicht. Der Sicherungswinkel 9 liegt somit einerseits an der Unterseite 3, andererseits an der Seitenwand 7 und zum dritten an dem Schraubenkopf 24 an.

Ausgehend von diesem erreichten Montagezwischenzustand wird dann beim weiteren Eindrehen der Schraube 18 in das Befestigungsloch 26 erreicht, dass die Gewindestege 17, 21 und 22 interferieren, da sie einen größeren Durchmesser haben, als der obere Bereich 16a des Durchführlochs 14. Dabei wird quasi versucht, dass diese Gewindestege 17, 21 und 22 diese Wände im Bereich des oberen Bereichs 16a deformieren, wobei im unteren Bereich der Schraube 18 jedoch kein Material zum Deformieren vorhanden ist. Daher ist es quasi im weiteren Einschraubprozess der Schraube 18 einfacher für den Sicherungswinkel 9, dass er sich automatisch selbstpositionierend nach oben bewegt. Dabei wird dann aufgrund auch dem in Fig. 6b erreichten Zwischenklemmzustand in den Darstellungen gemäß Fig. 7a und 7b erreicht, dass zum einen der Winkel γ kleiner wird und sich der Sicherungswinkel 9 in Richtung der Wand 7 automatisch hinbewegt und andererseits der Winkel β kleiner wird und sich der Sicherungswinkel 9 auch in Richtung der Unterseite 3 bewegt.

Gemäß dem weiteren Eindrehen der Schraube 18 wird dann gemäß Fig. 8a und 8b der montierte Endzustand des Sicherungswinkels 9 automatisch selbstpositionierend gewährleistet. Dabei wird automatisch erreicht, dass das Basisteil 12 nahezu vollflächig an der Seitenwand 7 anliegt und der Winkel γ somit Null wird. Entsprechend wird dies auch automatisch für das Auflageteil 13 erreicht, welches nahezu vollflächig die Unterseite 3 der Kochfeldplatte 2 kontaktiert und automatisch parallel an der Unterseite 3 anliegt. Auch hier wird somit der Winkel β zu Null. Wie dabei auch in den Fig. 7a und 8a zu erkennen ist, wird beim letztendlich vollständig Eindrehen der Schraube 18 auch eine Relativbewegung des Sicherungswinkels 9 im Hinblick auf die Position der Schraube 18 innerhalb des Durchführungslochs 14 durchgeführt.

Durch das Zusammenspiel der Formgebung und Ausmaße des Durchführlochs 14 und der Ausgestaltung des Schraubenstifts 20 mit dem Schraubenkopf 24 sowie die Anordnung des Befestigungslochs 26 im Hinblick auf die Ausmaße des Sicherungswinkels 9 wird dadurch ein automatischer Montageprozess im Hinblick auf die gewünschte Endposition des Sicherungswinkels 9 gewährleistet.

### Bezugszeichenliste

- 1: Kochfeld
- 2: Kochfeldplatte
- 3: Unterseite
- 4: Gehäuse
- 5: Aussparung
- 6: Arbeitsplatte
- 7, 8: Seitenwände
- 9, 10: Sicherungswinkel
- 12: Basisteil
- 13: Auflageteil
- 14: Durchführloch
- 15: Länge
- 16a: oberer Bereich
- 16b: unterer Bereich
- 17: Gewindesteg
- 18: Schraube
- 19: Schaft
- 20: Schraubenstift
- 21,22: Gewindestege
- 23: Oberseite
- 24: Schraubenkopf
- 25: Gewinde
- 26: Befestigungsloch
- 27: Ecke
- 28: Innenseite
- B, C: Achsen
- A: Längsachse

## Patentansprüche

1. Hausgerät mit einer Deckplatte (2), einem Sicherungswinkel und einem unter der Deckplatte (2) angeordneten Gehäuse (4), an dessen Seitenwand (7, 8) der Sicherungswinkel (9, 10) mit einer Schraube (18) befestigbar ist, **dadurch gekennzeichnet, dass** eine Form eines zum Durchführen der Schraube (18) ausgebildeten Durchführlochs (14) des Sicherungswinkels (9, 10) an einen Schraubenstift (20) mit einem Gewinde (17, 21, 22, 25) so angepasst ausgebildet ist, dass beim Anschrauben des Sicherungswinkels (9, 10) an das Gehäuse (4) sich ein Auflageteil (13) des Sicherungswinkels (9, 10) sich selbst positionierend an eine Unterseite (3) der Deckplatte (2) anlegt und parallel zur Deckplatte (2) ausgerichtet ist wobei das Durchführloch (14) ein Langloch ist, welches über seine Länge betrachtet einen oberen schmalen Bereich (16a) und einen unteren breiteren Bereich (16b) aufweist, und der obere Bereich (16a) eine Breite (b1) aufweist, die maximal einen Wert kleiner einer Höhe (h1) eines Gewindestegs (17, 21, 22) größer ist als der Außendurchmesser (d1) eines Schafts (19) des Schraubenstifts (20), und der Schraubenstift (20) durch das Durchführloch (14) geführt ist und ein Basisteil (12) des Sicherungswinkels (9, 10) zwischen zwei Gewindestegen (17, 21, 22) in einem Winkel (α) im Wesentlichen entsprechend der Gewindestegneigung positioniert wird.

2. Hausgerät nach Anspruch 1, **dadurch gekennzeichnet, dass** das Durchführloch (14) birnenförmig ist.

3. Hausgerät nach Anspruch 1 oder 2, **dadurch gekennzeichnet, dass** der Sicherungswinkel (9, 10) im Bereich des Durchführlochs (14) eine Dicke (b2) aufweist, die kleiner als ein Abstand (a1) zwischen zwei benachbarten Gewindestegen (17, 21, 22) ist.

4. Hausgerät nach einem der vorhergehenden Ansprüche, **dadurch gekennzeichnet, dass** es ein Kochfeld (1) ist und die Deckplatte eine Kochfeldplatte (2) ist.

5. Hausgerät nach Anspruch 4, **dadurch gekennzeichnet, dass** der Sicherungswinkel (9, 10) als Herunterfallschutz für das Gehäuse (4) im eingebauten Zustand des Kochfelds (1) in eine Aussparung (5) in einer Arbeitsplatte (6) angeordnet ist.

6. Verfahren zur Positionierung eines Sicherungswinkels (9, 10) an einem unter einer Deckplatte (2) angeordneten Gehäuses (4) eines Hausgeräts (1) relativ zur Deckplatte (2), bei welchem der Sicherungswinkel (9, 10) durch eine Schraube (18) an dem Gehäuse (4) befestigt wird, **dadurch gekennzeichnet, dass** eine Form eines zum Durchführen der Schraube (18) ausgebildeten Durchführlochs (14) des Sicherungswinkels (9, 10) an einen Schraubenstift (20) mit einem Gewinde (17, 21, 22, 25) angepasst ausgebildet wird, und beim Anschrauben des Sicherungswinkels (9, 10) an das Gehäuse (4) aufgrund der angepassten Form des Durchführungslochs (14) sich ein Auflageteil (13) des Sicherungswinkels (9, 10) sich selbst positionierend an die Unterseite (3) anlegt und beim Anschrauben selbstständig parallel zur Deckplatte (2) ausgerichtet wird, wobei das Durchführloch (14) als ein Langloch mit einem über seine Länge betrachtet oberen schmalen Bereich (16a) und einem unteren breiteren Bereich (16b) ausgebildet wird, der obere Bereich (16a) mit einer Breite (b1) ausgebildet wird, die maximal einen Wert kleiner einer Höhe (h1) eines Gewindestegs (17, 21, 22) größer ist, als der Außendurchmesser (d1) eines Schafts (19) des Schraubenstifts (20), und der Schraubenstift (20) durch das Durchführloch (14) geführt wird und ein Basisteil (12) des Sicherungswinkels (9, 10) zwischen zwei Gewindestegen (17, 21, 22) in einem Winkel (α) im Wesentlichen entsprechend der Gewindestegneigung positioniert wird.

7. Verfahren nach Anspruch 6, **dadurch gekennzeichnet, dass** das Durchführloch (14) birnenförmig ausgebildet wird.

8. Verfahren nach Anspruch 7 , **dadurch gekennzeichnet, dass** der Sicherungswinkel (9, 10) im Bereich des Durchführlochs (14) mit einer Dicke (b2) ausgebildet wird, die kleiner als ein Abstand (a1) zwischen zwei benachbarten Gewindestegen (17, 21, 22) ist.

9. Verfahren nach einem der Ansprüche 6 bis 8, **dadurch gekennzeichnet, dass** der Schraubenstift (20) an das Befestigungsloch (26) in der Seitenwand (7) des Gehäuses (4) angesetzt wird und durch die Neigung des Sicherungswinkels (9, 10) gegenüber der Unterseite (3) der Deckplatte (2) und gegenüber der Seitenwand (7) der Auflageteil (13) des Sicherungswinkels (9, 10) mit einer Endseite (27) an der Unterseite (3) der Deckplatte (2) und der Seitenwand (7) abstützend anliegt.

10. Verfahren nach Anspruch 9, **dadurch gekennzeichnet, dass** mit weiterem Eindrehen der Schraube (18) in das Befestigungsloch (26) aufgrund der geneigten Lage des Basisteils (12) eine Vorderseite des Basisteils (12) mit einer Innenseite (28) eines Schraubenkopfs (24) der Schraube (18) kontaktiert wird und eine Rückseite des Basisteils (12) mit der Seitenwand (7) des Gehäuses (4) kontaktiert wird.

11. Verfahren nach Anspruch 10, **dadurch gekennzeichnet, dass** bei weiterem Eindrehen der Schraube (18) in das Befestigungsloch (26) aufgrund des geklemmten Zustands des Sicherungswinkels (9, 10) zwischen der Schraube (18), der Unterseite (3) der Deckplatte (2) und der Seitenwand (7) durch die Gewindegeometrie und die Form des Durchführungslochs (14) die Gewindestege (17, 21, 22) an das Basisteil (12) im Bereich des oberen Bereichs (16) des Durchführlochs (14) angreifen und der Sicherungswinkel (9, 10) automatisch von der geneigten Lage in die selbst positionierte Endlage mit einem im Wesentlichen vollflächigen Anliegen der Rückseite des Basisteils (12) an der Seitenwand (7) und einem im Wesentlichen vollflächigen Anliegen des Auflageteils (13) an der Unterseite (3) der Deckplatte (2) mit paralleler Orientierung des Auflageteils (13) zur Deckplatte (2) gebracht wird.

## Claims

1. Domestic appliance with a covering board (2), a securing bracket and a housing (4) under the covering board (2), it being possible for the securing bracket (9, 10) to be attached to the side wall (7, 8) of said housing (4) with a screw (18), **characterised in that** a shape of a feed-through hole (14) - designed for the screw (18) to pass through - of the securing bracket (9, 10) is designed to be adapted to a screw pin (20) with a thread (17, 21, 22, 25) such that when the securing bracket (9, 10) is screwed onto the housing (4) a support part (13) of the securing bracket (9, 10) is joined in self-positioning fashion to an underside (3) of the covering board (2) and is oriented parallel to the covering board (2), wherein the feed-through hole (14) is an elongated hole which when viewed over its length has an upper narrow region (16a) and a lower wider region (16b), and the upper region (16a) has a width (b1) which is bigger, by maximally a value less than a height (h1) of a thread ridge (17, 21, 22), than the external diameter (d1) of a shaft (19) of the screw pin (20), and the screw pin (20) is passed through the feed-through hole (14) and a base part (12) of the securing bracket (9, 10) is positioned between two thread ridges (17, 21, 22) at an angle (α) essentially corresponding to the thread ridge gradient.

2. Domestic appliance according to claim 1, **characterised in that** the feed-through hole (14) is pear-shaped.

3. Domestic appliance according to claims 1 or 2, **characterised in that** in the region of the feed-through hole (14) the securing bracket (9, 10) has a thickness (b2) which is smaller than a distance (a1) between two adjacent thread ridges (17, 21, 22).

4. Domestic appliance according to one of the preceding claims, **characterised in that** it is a hob (1) and the covering board is a hob plate (2).

5. Domestic appliance according to claim 4, **characterised in that** the securing bracket (9, 10) is arranged as fall protection for the housing (4) when the hob (1) is built into a recess (5) in a worktop (6).

6. Method for positioning a securing bracket (9, 10) on a housing (4), under a covering board (2), of a domestic appliance (1) relative to the covering board (2), in which the securing bracket (9, 10) is attached to the housing (4) by a screw (18), **characterised in that** a shape of a feed-through hole (14) - designed for the screw (18) to pass through - of the securing bracket (9, 10) is designed to be adapted to a screw pin (20) with a thread (17, 21, 22, 25), and that, because of the adapted shape of the feed-through hole (14), when the securing bracket (9, 10) is screwed onto the housing (4) a support part (13) of the securing bracket (9, 10) is joined in self-positioning fashion to the underside (3) and during the screwing is independently oriented parallel to the covering board (2), wherein the feed-through hole (14) is designed as an elongated hole which when viewed over its length has an upper narrow region (16a) and a lower wider region (16b), the upper region (16a) is designed with a width (b1) which is bigger, by maximally a value less than a height (h1) of a thread ridge (17, 21, 22), than the external diameter (d1) of a shaft (19) of the screw pin (20), and the screw pin (20) is passed through the feed-through hole (14) and a base part (12) of the securing bracket (9, 10) is positioned between two thread ridges (17, 21, 22) at an angle (α) essentially corresponding to the thread ridge gradient.

7. Method according to claim 6, **characterised in that** the feed-through hole (14) is designed to be pear-shaped.

8. Method according to claim 7, **characterised in that** the securing bracket (9, 10) is designed, in the region of the feed-through hole (14), with a thickness (b2) which is smaller than a distance (a1) between two adjacent thread ridges (17, 21, 22).

9. Method according to one of claims 6 to 8, **characterised in that** the screw pin (20) is applied to the attachment hole (26) in the side wall (7) of the housing (4) and because of the gradient of the securing bracket (9, 10) compared to the underside (3) of the covering board (2) and compared to the side wall (7) of the support part (13) of the securing bracket (9, 10) is butted in braced fashion by an end side (27) against the underside (3) of the covering board (2) and the side wall (7).

10. Method according to claim 9, **characterised in that** by further screwing the screw (18) into the attachment hole (26) the inclined position of the base part (12) means that a front side of the base part (12) is in contact with an inner side (28) of a screw head (24) of the screw (18) and a rear side of the base part (12) is in contact with the side wall (7) of the housing (4).

11. Method according to claim 10, **characterised in that** by further screwing the screw (18) into the attachment hole (26) the clamped state of the securing bracket (9, 10) between the screw (18), the underside (3) of the covering board (2) and the side wall (7) means that as a result of the thread geometry and the shape of the feed-through hole (14) the thread ridges (17, 21, 22) engage with the base part (12) in the region of the upper region (16) of the feed-through hole (14) and the securing bracket (9, 10) is automatically brought from the inclined position into the self-positioned final position with essentially the whole surface of the rear side of the base part (12) butting against the side wall (7) and essentially the whole surface of the support part (13) butting against the underside (3) of the covering board (2) with parallel orientation of the support part (13) to the covering board (2).

## Revendications

1. Appareil ménager doté d'une plaque de recouvrement (2), d'une équerre de fixation et d'un boîtier (4) placé sous la plaque de recouvrement (2) et sur la paroi latérale (7, 8) duquel l'équerre de fixation (9, 10) peut être fixée avec une vis (18), **caractérisé en ce qu'**une forme d'un trou de passage (14) destiné à faire passer la vis (18) de l'équerre de fixation (9, 10) est réalisée d'une manière adaptée à une pointe à visser (20) pourvue d'un filetage (17, 21, 22, 25), de telle sorte que, lorsque l'on visse l'équerre de fixation (9, 10) sur le boîtier (4), une partie d'appui (13) de l'équerre de fixation (9, 10) se positionne d'elle-même en appui contre une face inférieure (3) de la plaque de recouvrement (2) et est orientée parallèlement à la plaque de recouvrement (2), ledit trou de passage (14) étant un trou oblong qui, observé sur sa longueur, a une portion haute étroite (16a) et une portion basse plus large (16b), et ladite portion haute (16a) présentant une largeur (b1) qui est supérieure au diamètre extérieur (d1) de la tige (19) de la pointe à visser (20) au maximum d'une valeur inférieure à la hauteur (h1) d'un filet (17, 21, 22), et ladite pointe à visser (20) passant à travers le trou de passage (14), et une partie de base (12) de l'équerre de fixation (9, 10) se positionnant entre deux filets (17, 21, 22) selon un angle (α) sensiblement égal à l'inclinaison des filets.

2. Appareil ménager selon la revendication 1, **caractérisé en ce que** le trou de passage (14) est en forme de poire.

3. Appareil ménager selon la revendication 1 ou 2, **caractérisé en ce que** l'équerre de fixation (9, 10) a au niveau du trou de passage (14) une épaisseur (b2) qui est inférieure à une distance (a1) séparant deux filets (17, 21, 22) voisins.

4. Appareil ménager selon l'une des revendications précédentes, **caractérisé en ce que** l'appareil ménager est une table de cuisson (1) et la plaque de recouvrement est une plaque de table de cuisson (2).

5. Appareil ménager selon la revendication 4, **caractérisé en ce que** l'équerre de fixation (9, 10), en tant que dispositif de protection contre la chute du boîtier (4) lorsque la table de cuisson (1) est montée dans un évidement (5), est placée dans un plan de travail (6).

6. Procédé de positionnement d'une équerre de fixation (9, 10) sur un boîtier (4) placé sous une plaque de recouvrement (2) d'un appareil ménager (1) par rapport à la plaque de recouvrement (2), selon lequel on fixe l'équerre de fixation (9, 10) avec une vis (18) sur le boîtier (4), **caractérisé en ce que** l'on réalise une forme d'un trou de passage (14) destiné à faire passer la vis (18) de l'équerre de fixation (9, 10) d'une manière adaptée à une pointe à visser (20) pourvue d'un filetage (17, 21, 22, 25), et lorsque l'on visse l'équerre de fixation (9, 10) sur le boîtier (4), en raison de la forme adaptée du trou de passage (14), une partie d'appui (13) de l'équerre de fixation (9, 10) se positionne d'elle-même en appui contre la face inférieure (3) et s'oriente pendant le vissage parallèlement à la plaque de recouvrement (2), ledit trou de passage (14) étant réalisé sous forme d'un trou oblong ayant, observé sur sa longueur, une portion haute étroite (16a) et une portion basse plus large (16b), ladite portion haute (16a) étant réalisée avec une largeur (b1) qui est supérieure au diamètre extérieur (d1) de la tige (19) de la pointe à visser (20) au maximum d'une valeur inférieure à la hauteur (h1) d'un filet (17, 21, 22), et l'on fait passer ladite pointe à visser (20) à travers le trou de passage (14), et une partie de base (12) de l'équerre de fixation (9, 10) se positionne entre deux filets (17, 21, 22) selon un angle (α) sensiblement égal à l'inclinaison des filets.

7. Procédé selon la revendication 6, **caractérisé en ce que** le trou de passage (14) est réalisé en forme de poire.

8. Procédé selon la revendication 7, **caractérisé en ce que** l'équerre de fixation (9, 10) est réalisé au niveau du trou de passage (14) avec une épaisseur (b2) qui est inférieure à une distance (a1) séparant deux filets (17, 21, 22) voisins.

9. Procédé selon l'une des revendications 6 à 8, **caractérisé en ce que** l'on applique la pointe à visser (20) contre le trou de fixation (26) prévu dans la paroi latérale (7) du boîtier (4), et en raison de l'inclinaison de l'équerré de fixation (9, 10) par rapport à la face inférieure (3) de la plaque de recouvrement (2) et par rapport à la paroi latérale (7), la partie d'appui (13) de l'équerre de fixation (9, 10) prend appui avec une face d'extrémité (27) sur la face inférieure (3) de la plaque de recouvrement (2) et la paroi latérale (7).

10. Procédé selon la revendication 9, **caractérisé en ce que**, en continuant de visser la vis (18) dans le trou de fixation (26), en raison de la position inclinée de la partie de base (12), une face avant de la partie de base (12) vient en contact avec une face intérieure (28) d'une tête de vis (24) de la vis (18) et une face arrière de la partie de base (12) vient en contact avec la paroi latérale (7) du boîtier (4).

11. Procédé selon la revendication 10, **caractérisé en ce que**, en continuant de visser la vis (18) dans le trou de fixation (26), en raison de l'état bloqué de l'équerre de fixation (9, 10) entre la vis (18), la face inférieure (3) de la plaque de recouvrement (2) et la paroi latérale (7), les filets (17, 21, 22), de par la géométrie du filetage et la forme du trou de passage (14), viennent s'appliquer contre la partie de base (12) au niveau de la portion haute (16) du trou de passage (14) et l'équerre de fixation (9, 10) est amenée automatiquement de la position inclinée dans la position finale auto-positionnée où la face arrière de la partie de base (12) est appliquée sensiblement sur toute la surface contre la paroi latérale (7) et où la partie d'appui (13) est appliquée sensiblement sur toute la surface contre la face arrière (3) de la plaque de recouvrement (2), avec une orientation parallèle de la partie d'appui (13) à la plaque de recouvrement (2).
